# FASCICULE DE BREVET EUROPEEN

(11) **EP 1 044 129 B1**
(45) Date de publication et mention de la délivrance du brevet: **20.08.2003**
(21) Numéro de dépôt: 98962508.2
(22) Date de dépôt: 18.12.1998
(51) Int. Cl.: B62D 25/20

(54) **PROCEDE D'ASSEMBLAGE ET STRUCTURE DE PLANCHER POUR VEHICULES AUTOMOBILES**
VERFAHREN FÜR DEN ZUSAMMENBAU UND AUFBAU EINES KRAFTFAHRZEUGBODENS
METHOD FOR ASSEMBLING AND STRUCTURING MOTOR VEHICLE FLOORS

(30) Priorité: 30.12.1997 FR 9716657
(43) Date de publication de la demande: 18.10.2000
(73) Titulaire: Renault s.a.s., 92100 Boulogne Billancourt (FR)
(72) Inventeur: ALVEZ, Gilbert, F-92370 Chaville (FR); CUNI, Didier, F-78340 Les Clayes sous Bois (FR); ROUSSEL, François, F-91410 Dourdan (FR)
(86) Numéro de dépôt international: FR9802780
(87) Numéro de publication internationale: WO99035022

(56) Documents cités:
- EP-A- 0 270 097
- EP-A- 0 333 267
- DE-A- 4 340 675
- DE-C- 19 506 936
- DE-U- 8 232 306

## Description

L'invention concerne une structure de plancher pour véhicules automobiles et son procédé d'assemblage associé et concerne plus particulièrement une structure de plancher offrant un volume de rangement important sous le compartiment à bagages du véhicule et un procédé d'assemblage simple.

On connaît depuis longtemps une structure de plancher comprenant deux longerons latéraux sur lesquels repose un panneau de plancher s'étendant transversalement sur la largeur du véhicule et présentant, au niveau du compartiment à bagages du véhicule, une cavité destinée à servir de logement pour une roue de secours.

Classiquement, une telle cavité est réalisée à l'aide d'une tôle emboutie à la forme du logement de la roue de secours. la tôle étant intégrée au reste du panneau de plancher par soudage de manière à former un seul panneau de plancher reposant sur les longerons. Toutefois, les contraintes de réalisation liées à l'emboutissage ne permettent pas d'obtenir simplement un logement de roue de secours de forme complexe.

Il est connu pour remédier à cet inconvénient de remplacer la partie du panneau de plancher métallique formant le logement de roue de secours par une pièce en matière plastique venant se fixer dans une ouverture du panneau de plancher métallique, les bords de la pièce en matière plastique reposant alors sur le panneau de plancher en tôle. Cette pièce en matière plastique peut alors posséder une forme adaptée à la forme de la roue de secours et présenter des cavités supplémentaires de part et d'autre du logement de roue de secours pour le rangement d'un cric ou de divers accessoires.

Toutefois, une telle structure de plancher nécessite la mise en place d'un poste spécifique sur la ligne de montage du véhicule, au niveau duquel le logement de roue de secours en matière plastique est amené par l'intérieur du compartiment à bagages pour être fixé au plancher métallique. Par ailleurs, le volume des cavités supplémentaires de part et d'autre du logement de roue de secours est limité par la surface du panneau de plastique dans le fond du compartiment à bagages.

L'objet de la présente invention est donc de proposer une nouvelle structure de plancher de véhicule automobile offrant un procédé d'assemblage optimisé tout en permettant la multiplication des espaces de rangement sous le compartiment à bagages du véhicule, pour le logement par exemple d'une roue de secours et de divers accessoires.

A cet effet, l'invention concerne une structure de plancher pour véhicules automobiles comprenant un longeron latéral de chaque côté de la structure et un panneau de plancher disposé sur les longerons et s'étendant transversalement sur la largeur du véhicule en interconnectant les longerons.

Selon l'invention, la structure de plancher est caractérisée en ce que le panneau de plancher présente, au niveau du compartiment à bagages du véhicule, une ouverture s'étendant entre les longerons latéraux, cette ouverture donnant accès à une cavité fermée par un bac fixé sous les longerons du véhicule.

Cette configuration permet de simplifier le montage du bac.

Selon une autre caractéristique de l'invention, le bac forme un logement pour roue de secours.

Selon une autre caractéristique de l'invention, le bac s'étend transversalement au delà des longerons, jusqu'aux bords latéraux du véhicule.

Cette caractéristique permet d'utiliser le volume non occupé sous le panneau de plancher du véhicule.

Selon une autre caractéristique de l'invention. le panneau de plancher présente une trappe donnant accès à un volume fermé délimité par les extensions latérales du bac et le panneau de plancher.

Cette caractéristique permet d'exploiter le volume compris entre le panneau de plancher et le bac comme volume de rangement.

Selon une autre caractéristique de l'invention, l'ouverture du panneau de plancher s'étend transversalement jusqu'aux bords latéraux du véhicule.

Cette caractéristique permet d'accéder directement au volume du bac compris entre les longerons et les bords latéraux du véhicule.

Selon une autre caractéristique de l'invention, le panneau de plancher est réalisé en tôle, le bac étant réalisé en matière plastique.

Cette caractéristique permet de réaliser une structure de plancher rigide en tôle et d'utiliser une matière plastique tel qu'un matériau thermoplastique, thermodurcissable ou thermoplastique renforcé estampable, pour réaliser à coût réduit un bac de forme complexe. Le moulage du bac pourra alors être réalisé par injection, par compression ou injection et compression.

Selon une autre caractéristique de l'invention, le bac en matière plastique est réalisé par moulage et comporte des attaches destinées à supporter des éléments s'étendant le long du bac tels qu'un tuyau d'échappement ou des éléments de câblage du véhicule.

Cette caractéristique permet d'utiliser le bac comme platine support de manière à pouvoir préassembler, eu dehors de la chaîne de montage, différents éléments au bac ce qui permet de réduire le nombre d'opération de fixation sur la ligne de montage et donc de réduire le temps de cycle de fabrication d'un véhicule.

Selon une autre caractéristique de l'invention, le bac en matière plastique comporte à son extrémité arrière une poutre s'étendant transversalement sur la largeur de véhicule et servant de support et d'absorbeur de chocs pour le bouclier arrière du véhicule.

Cette caractéristique permet de simplifier le montage du bouclier arrière.

Selon une autre caractéristique de l'invention, le bac comporte des trous permettant l'évacuation de l'air emprisonné dans l'habitacle du véhicule.

Cette caractéristique permet d'éviter la création d'une surpression dans l'habitacle lors de la fermeture des portes du véhicule.

Selon une autre caractéristique de l'invention, le bac possède des formes adaptées pour améliorer l'aérodynamisme sous le véhicule.

L'invention concerne également un procédé de montage de la structure de plancher précédemment décrite, caractérisé en ce qu'on assemble dans un premier temps le panneau de plancher avec les bords latéraux du véhicule, et en ce qu'on amène le bac par dessous le véhicule au niveau du poste de montage du groupe motopropulseur et des trains roulants, ledit bac étant fixé sous les longerons au moyen de vis de fixation.

Selon une autre caractéristique du procédé selon l'invention, le bac est prééquipé d'éléments destinés à le parcourir. tels que des éléments de la ligne d'échappement, avant son assemblage sous les longerons.

Cette caractéristique permet de gagner du temps d'assemblage sur la chaine de montage du véhicule.

D'autres caractéristiques et avantages apparaîtront à la lecture de la description d'un exemple de dispositif selon l'invention, en référence aux dessins dans lesquels :
- la figure 1a est une vue en perspective de la partie arrière d'un véhicule coupé longitudinalement et muni d'une structure de plancher selon un mode particulier de l'invention,
- la figure 1b est une vue similaire à la figure la représentant le véhicule avant le montage du bac sous les longerons,
- la figure 2 est une vue en perspective du bac de la figure 1.
- la figure 3 est une vue de détail en coupe de la structure de plancher au niveau d'une fixation du bac sur les longerons.
- la figure 4 est une vue en coupe partielle de la structure de plancher au niveau du pare-chocs arrière.

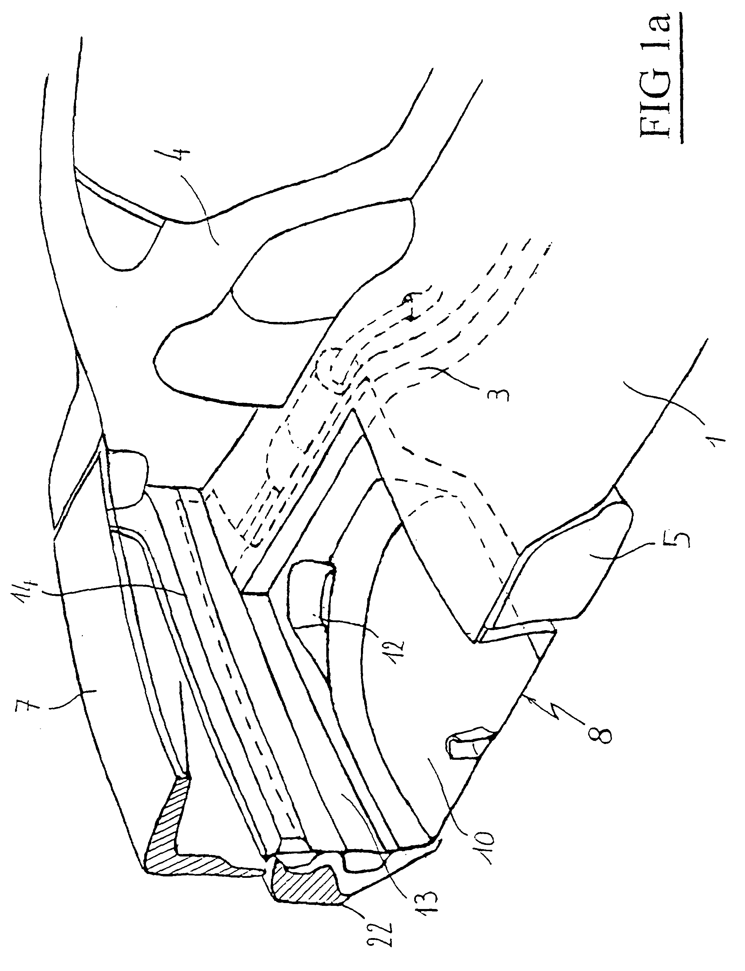

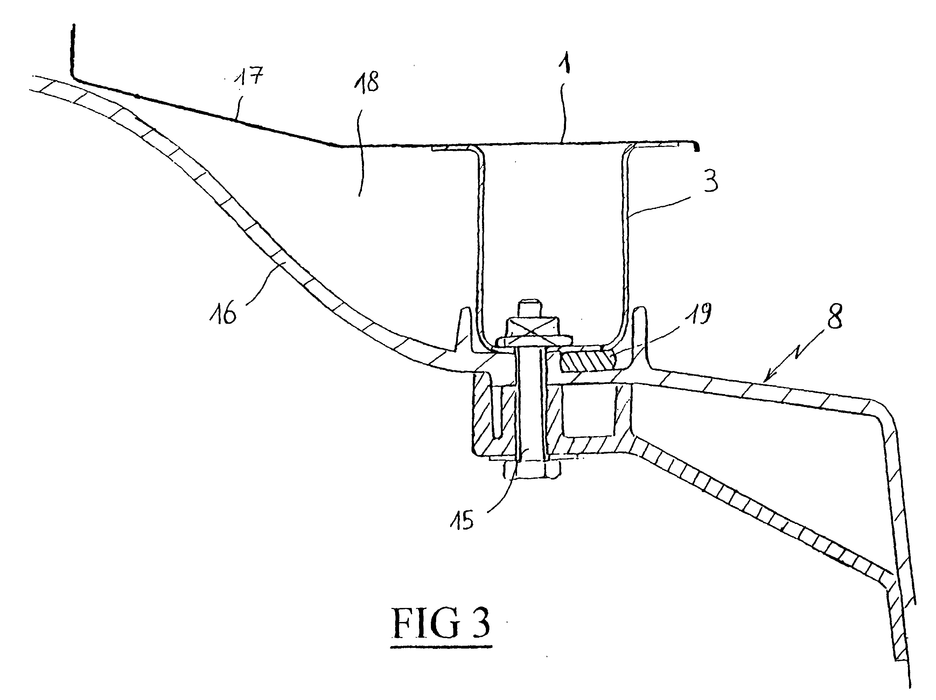

Ainsi que cela est montré sur les figures 1a et 3, la structure de plancher selon l'invention comprend un panneau de plancher 1 et deux longerons latéraux 3 s'étendant chacun de chaque côté de la partie arrière du panneau de plancher 1 et assurant la rigidité de ce demier. Le panneau de plancher 1, réalisé en tôles embouties, est relié aux deux parois latérales 4 du véhicule par soudage et comporte un bossage transversal 5 destiné à l'intégration d'un réservoir à carburant sous le panneau de plancher 1, le bossage transversal 5 servant également de support à la banquette arrière du véhicule (non représentée).

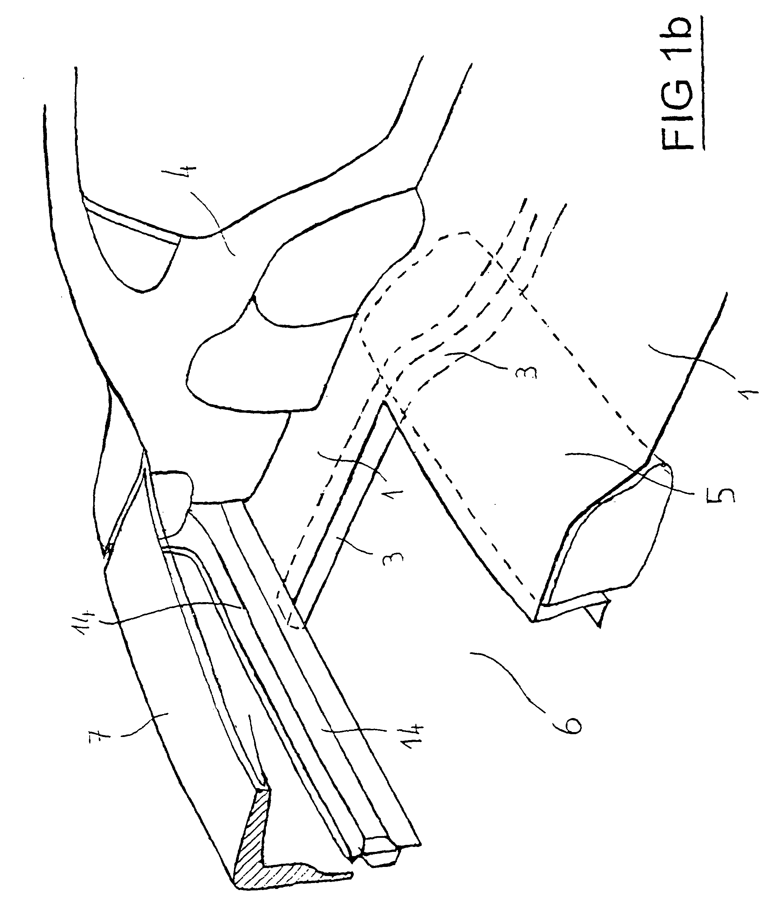

Comme on peut le voir sur la figure 1b, le panneau de plancher 1 présente une ouverture 6 s'étendant longitudinalement depuis le bossage transversal 5 jusqu'à l'extrémité arrière du véhicule, sur une largeur correspondant sensiblement à la distance séparant les deux longerons latéraux 3.

Cette ouverture 6 disposée en regard de la porte de coffre 7 du véhicule est fermée par un bac 8 rapporté sous les longerons latéraux 3 du véhicule .

Comme on peut le voir plus précisément sur les figures la et 2, le bac 8, réalisé par moulage d'une matière thermoplastique, comporte un logement 10 destiné au rangement d'une roue de secours et des emplacements 11 et 12 destinés respectivement à recevoir un bidon d'huile et un réservoir de lave glace.

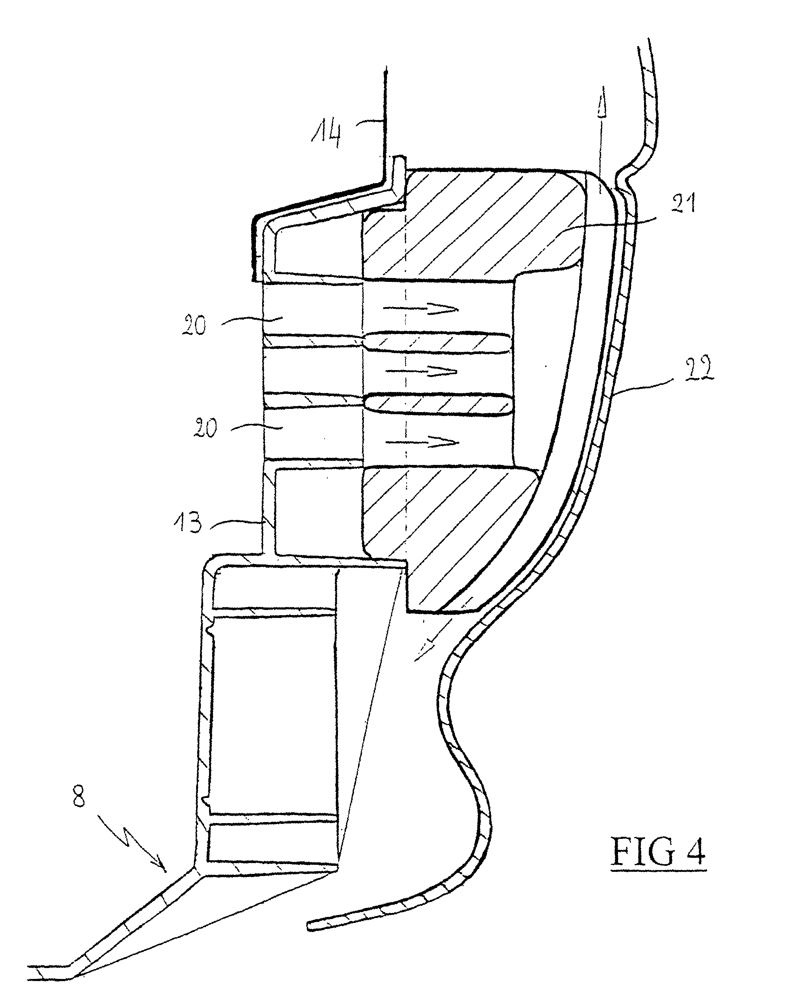

Le bac 8 comporte également, au niveau de son extrémité arrière, un poutre transversale 13 servant de support au bouclier arrière 22 du véhicule et participant également à la résistance aux chocs de ce dernier. Cette poutre transversale 13 comporte des trous 20, représentés sur la figure 4, permettant l'extraction de l'air de l'habitacle lors de la fermeture des portes du véhicule. Un absorbeur 21 est également fixé sur la partie supérieure de la poutre transversale 13 pour absorber les chocs contre le bouclier arrière 22.

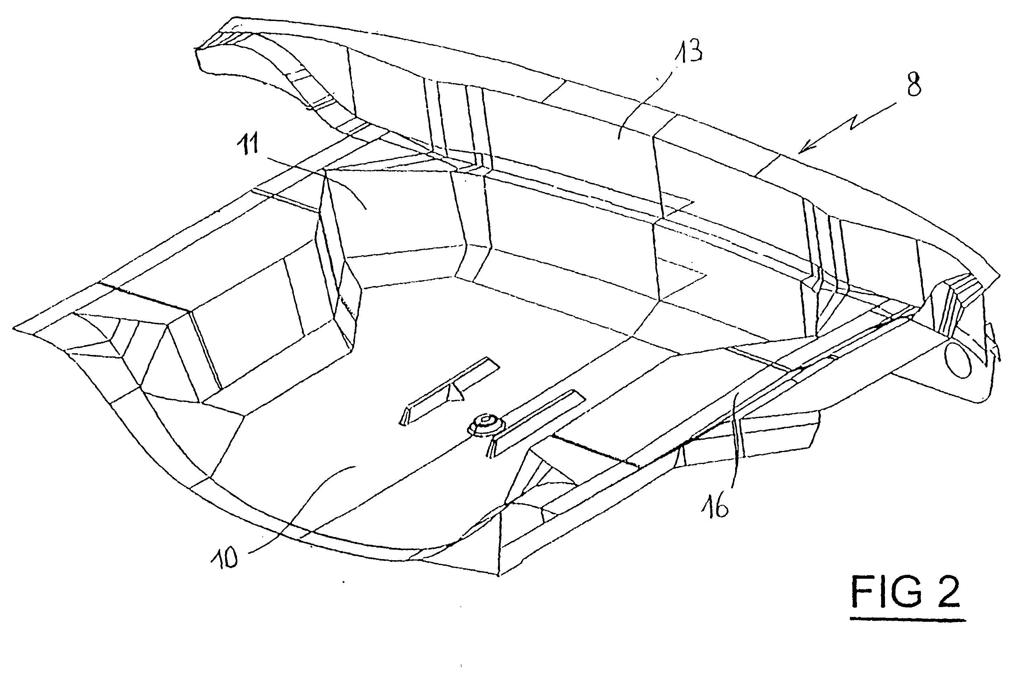

Ainsi que cela est représenté sur les figures 2 et 3, le bac 8 présente des ailes 16 s'étendant transversalement au delà des longerons latéraux 3 pour venir s'appliquer à proximité des parois latérales 4 du véhicule, définissant ainsi un volume fermé 18 compris entre le panneau de plancher I et les ailes 16. Ce volume 18 peut être accessible par une trappe 17 réalisée dans le panneau de plancher 1 de manière à permettre le rangement de divers accessoires.

Le bac 8 sous le panneau de plancher 1 peut également être avantageusement exploité pour améliorer l'aérodynamisme du véhicule en munissant l'ensemble du bac 8, et en particulier les ailes 16, de formes inférieures aérodynamiquement étudiées pour réduire la trainée du véhicule.

Dans une variante de réalisation de l'invention non représentée sur les figures, l'ouverture 6 du panneau de plancher 1 s'étend transversalement jusqu'aux bords latéraux du véhicule de manière à dégager complètement l'accès aux volumes du bac 8, le fond du compartiment à bagages étant alors formé par un tapis rigide prenant appui sur les longerons 3. Ce mode de réalisation permet de simplifier la réalisation du panneau de plancher 1 tout en offrant un accès direct aux zones de rangement du bac 8 disposées entre les longerons 3 et les parois latérales 4.

Le montage de la structure de plancher selon l'invention s'effectue simplement eu fixant le bac 8 sous les longerons latéraux 3 au moyen de vis de fixation 15, la poutre 13 étant alors appliquée contre une traverse métallique 14 reliant les deux parois latérales 4 du véhicule, les autres bords du bac 8 étant appliqués contre les bords du panneau de plancher 1 et munis d'un joint 19 de manière à assurer l'étanchéité de la structure. Cet assemblage du bac 8 sur le véhicule peut avantageusement s'effectuer sur la ligne de montage du véhicule, au poste de montage du moteur et des trains roulants au niveau duquel la carrosserie du véhicule est surélevée pour permettre la mise en place des trains roulant et du groupe motopropulseur. permettant également la mise en place du bac 8 par dessous le véhicule.

Par ailleurs, par le procédé avantageux de montage décrit précédemment, le bac 8 peut également servir de platine support des éléments parcourant le soubassement du véhicule. Ainsi le bac 8 peut comporter des attaches destinées à maintenir le pot d'échappement et être prééquipé de ce pot d'échappement avant d'être assemblé au vélucule afin de gagner du temps sur la ligne de montage du véhicule.

Il est à noter que la structure de plancher selon l'invention, et particulièrement l'ouverture 6 sur la partie arrière de la carrosserie, facilite également l'évacuation des fluides lors des passages de la carrosserie métallique dans des bains, tels que les bains de cataphorèse, lors du cycle de peinture.

Bien entendu, l'invention n'est nullement limitée au mode de réalisation décrit et illustré qui n'a été donné qu'à titre d'exemple.

## Revendications

1. Structure de plancher pour véhicules automobiles comprenant un longeron latéral (3) de chaque côté de ladite structure, un panneau de plancher (1) disposé sur lesdits longerons (3) et s'étendant transversalement sur la largeur du véhicule, interconnectant lesdits longerons (3), **caractérisée en ce que** ledit panneau de plancher (1) présente, au niveau du compartiment à bagages du véhicule, une ouverture (6) s'étendant entre lesdits longerons latéraux (3), ladite ouverture (6) donnant accès à une cavité (10) fermée par un bac (8) fixé sous les longerons (3) du véhicule.

2. Structure de plancher pour véhicule automobile selon la revendication 1, **caractérisée en ce que** ladite cavité (10) forme un logement pour roue de secours.

3. Structure de plancher pour véhicule automobile selon l'une quelconque des revendications 1 à 2, **caractérisée en ce que** ledit bac (8) s'étend transversalement au delà des longerons latéraux (3), jusqu'aux bords latéraux du véhicule

4. Structure de plancher de véhicule automobile selon la revendication 3, **caractérisée en ce que** ledit panneau de plancher (1) présente une trappe (17) donnant accès à un volume (18) fermé délimité par les extensions latérales dudit bac (8) et ledit panneau de plancher (1).

5. Structure de plancher de véhicule automobile selon la revendication 3, **caractérisée en ce que** l'ouverture (6) du panneau de plancher (1) s'étend transversalement jusqu'aux bords latéraux du véhicule.

6. Structure de plancher pour véhicule automobile selon l'une quelconque des revendications 1 à 5, **caractérisée en ce que** ledit panneau de plancher (1) est réalisé en tôle, ledit bac (8) étant réalisé en matière plastique.

7. Structure de plancher pour véhicule automobile selon la revendication 6, **caractérisée en ce que** ledit bac (8) en matière plastique est réalisé par moulage et comporte des attaches destinées à supporter des éléments s'étendant le long dudit bac (8) tels qu'un tuyau d'échappement ou des éléments de câblage du véhicule.

8. Structure de plancher pour véhicule automobile selon l'une quelconque des revendications 1 à 7, **caractérisée en ce que** ledit bac (8) comporte à son extrémité arrière une poutre (13) s'étendant transversalement sur la largeur de véhicule et servant de support et d'absorbeur de chocs pour le bouclier arrière (22) du véhicule.

9. Structure de plancher pour véhicule automobile selon l'une quelconque des revendications 1 à 8, **caractérisée en ce que** ledit bac (8) comporte des trous (20) permettant l'évacuation de l'air emprisonné dans l'habitacle du véhicule.

10. Structure de plancher pour véhicule automobile selon l'une quelconque des revendications 1 à 9, **caractérisée en ce que** le bac (8) possède des formes adaptées pour améliorer l'aérodynamisme sous le véhicule.

11. Procédé d'assemblage d'une structure de plancher selon l'une quelconque des revendications 1 à 10, **caractérisé en ce qu'**on assemble dans un premier temps le panneau de plancher (1) avec les bords latéraux (4) véhicule, et **en ce qu'**on amène le bac (8) par dessous le véhicule au niveau du poste de montage du groupe motopropulseur et des trains roulants, ledit bac (8) étant fixé sous les longerons (3) au moyen de vis de fixation (15).

12. Procédé d'assemblage d'une structure de plancher selon l'une quelconque des revendications 10 à 11, **caractérisé en ce que** ledit bac (8) est prééquipé d'éléments destinés à le parcourir, tels que des éléments de la ligne d'échappement, avant son assemblage sous les longerons (3).

## Patentansprüche

1. Bodenstruktur für ein Kraftfahrzeug, das auf jeder Seite der Struktur mit einem Seitenholm (3) versehen ist, wobei eine Bodenplatte (1) auf den Holmen (3) angeordnet ist und sich in Querrichtung über die Breite des Fahrzeuges erstreckt und die beiden Holme (3) miteinander verbindet, **dadurch gekennzeichnet, dass** die Bodenplatte (1) auf Höhe des Kofferraumes des Fahrzeuges mit einer Öffnung (6) versehen ist, die zwischen den Seitenholmen (3) ausgebildet ist, wobei diese Öffnung (6) den Zugang zu einem Hohlraum (10) ermöglicht, der durch einen Behälter (8) begrenzt wird, der unterhalb der Holme (3) des Fahrzeuges angeordnet ist.

2. Bodenstruktur für ein Kraftfahrzeug nach Anspruch 1, **dadurch gekennzeichnet, dass** der Hohlraum (10) eine Aufnahme für ein Reserverad ist.

3. Bodenstruktur für ein Kraftfahrzeug nach einem der Ansprüchen 1 und 2, **dadurch gekennzeichnet, dass** sich der Behälter (8) in Querrichtung über die Seitenholme (3) hinaus bis zu den Seitenwänden des Fahrzeuges erstreckt.

4. Bodenstruktur für ein Kraftfahrzeug nach Anspruch 3, **dadurch gekennzeichnet, dass** die Bodenplatte (1) eine Klappe (17) aufweist, die den Zugang zu einem geschlossenen Raum (18) ermöglicht, der von den Seitenwänden des Behälters (8) und den Seitenwänden des Fahrzeuges begrenzt ist.

5. Bodenstruktur für ein Kraftfahrzeug nach Anspruch 3, **dadurch gekennzeichnet, dass** sich die Öffnung (6) in der Bodenplatte (1) in Querrichtung bis zu den Seitenwänden des Fahrzeuges erstreckt.

6. Bodenstruktur für ein Kraftfahrzeug nach einem der Anspruch 1 bis 5, **dadurch gekennzeichnet, dass** die Bodenplatte (1) aus Blech besteht und dass der Behälter (8) aus Kunststoff besteht.

7. Bodenstruktur für ein Kraftfahrzeug nach Anspruch 6, **dadurch gekennzeichnet, dass** der aus Kunststoff bestehende Behälter (8) durch einen Gießvorgang hergestellt worden ist und Befestigungsteile für Bauteile aufweist, die entlang des Behälters (8) angeordnet werden, wie zum Beispiel eine Abgasleitung oder Verkabelungsteile des Fahrzeuges.

8. Bodenstruktur für ein Kraftfahrzeug nach einem der Ansprüche 1 bis 7, **dadurch gekennzeichnet, dass** der Behälter (8) an seinem rückwärtigen Ende mit einer Strebe (13) versehen ist, die sich in Querrichtung über die Breite des Fahrzeuges erstreckt und die als Halterung und als Stossdämpfer für auf die Rückwand (22) des Fahrzeuges auftreffende Stöße dient.

9. Bodenstruktur für ein Kraftfahrzeug nach einem der Ansprüche 1 bis 8, **dadurch gekennzeichnet, dass** der Behälter (8) mit Öffnungen (2) für die Abfuhr von im Fahrgastraum enthaltener Luft versehen ist.

10. Bodenstruktur für ein Kraftfahrzeug nach einem der Ansprüche 1 bis 9, **dadurch gekennzeichnet, dass** der Behälter (8) eine Formgebung aufweist, die die Aerodynamik unterhalb des Fahrzeuges verbessert.

11. Verfahren zum Einbau einer Bodenstruktur für ein Kraftfahrzeug nach einem der Ansprüche 1 bis 10, **dadurch gekennzeichnet, dass** zuerst die Bodenplatte (1) mit den Seitenwänden (4) des Fahrzeuges verbunden wird, dass danach der Behälter (8) von der Unterseite des Fahrzeuges aus in der Arbeitsstation für den Einbau der Antriebsgruppe und der Achsen eingeführt wird und dass anschließend der Behälter (8) unterhalb der Seitenholme (3) mittels Befestigungsschrauben (15) befestigt wird.

12. Verfahren zum Einbau einer Bodenstruktur für ein Kraftfahrzeug nach einem der Ansprüche 10 bis 11, **dadurch gekennzeichnet, dass** der Behälter (8) vor seiner Befestigung unterhalb der Holme (3) mit Bauteilen versehen wird, die an ihm entlang laufen, wie zum Beispiel Teile der Auspuffanlage.

## Claims

1. A floor structure for automobile vehicles comprising a side member (3) for each side of the structure, a floor panel (1) disposed on these side members (3) and extending transversely over the width of the vehicle, interconnecting the side members (3), **characterised in that** the floor panel (1) comprises, at the location of the luggage compartment of the vehicle, an opening (6) extending between the side members (3), this opening (6) providing access to a cavity (10) closed by a tank (8) fixed below the side members (3) of the vehicle.

2. A floor structure for an automobile vehicle as claimed in claim 1, **characterised in that** the cavity (10) forms a housing for a spare wheel.

3. A floor structure for an automobile vehicle as claimed in any one of claims 1 to 2, **characterised in that** the tank (8) extends transversely beyond the side members (3) up to the side edges of the vehicle.

4. A floor structure for an automobile vehicle as claimed in claim 3, **characterised in that** the floor panel (1) comprises a trapdoor (17) providing access to a closed volume (18) bounded by the lateral extensions of the tank (8) and the floor panel (1).

5. A floor structure for an automobile vehicle as claimed in claim 3, **characterised in that** the opening (6) of the floor panel (1) extends transversely up to the side edges of the vehicle.

6. A floor structure for an automobile vehicle as claimed in any one of claims 1 to 5, **characterised in that** the floor panel (1) is made from sheet metal, the tank (8) being made from plastic material.

7. A floor structure for an automobile vehicle as claimed in claim 6, **characterised in that** the tank (8) of plastic material is made by moulding and comprises attachments adapted to support members extending along the tank (8) such as an exhaust pipe or cabling members of the vehicle.

8. A floor structure for an automobile vehicle as claimed in any one of claims 1 to 7, **characterised in that** the rear end of the tank (8) comprises a beam (13) extending transversely over the width of the vehicle and acting as a support and shock absorber for the rear bumper (22) of the vehicle.

9. A floor structure for an automobile vehicle as claimed in any one of claims 1 to 8, **characterised in that** the tank (8) comprises holes (20) enabling the evacuation of the air trapped in the vehicle's passenger space.

10. A floor structure for an automobile vehicle as claimed in any one of claims 1 to 9, **characterised in that** the tank (8) has shapes adapted to improve the aerodynamics below the vehicle.

11. A method for the assembly of a floor structure as claimed in any one of claims 1 to 10, **characterised in that** the floor panel (1) is initially assembled with the side edges (4) of the vehicle, and **in that** the tank (8) is supplied below the vehicle at the location of the assembly point for the engine unit and wheel trains, the tank (8) being secured below the side members (3) by means of fastening screws (15).

12. A method for the assembly of a floor structure as claimed in any one of claims 1 to 11, **characterised in that** the tank (8) is pre-fitted with members intended to run through it, such as components of the exhaust line, prior to its assembly below the side members (3).
